Europäisches Patentamt

European Patent Office

Office européen des brevets

(19)

(11) Numéro de publication: **0 069 642 B1**

(12) **FASCICULE DE BREVET EUROPEEN**

(45) Date de publication du fascicule du brevet:
19.06.85

(51) Int. Cl.⁴: **B 32 B 15/08, B 65 D 65/40**

(21) Numéro de dépôt: 82401183.7

(22) Date de dépôt: 25.06.82

(54) **Procédé d'emballage de matériaux sensibles à l'oxygène et/ou à la vapeur d'eau.**

(30) Priorité: **06.07.81 FR 8113220**

(43) Date de publication de la demande:
**12.01.83 Bulletin 83/2**

(45) Mention de la délivrance du brevet:
**19.06.85 Bulletin 85/25**

(84) Etats contractants désignés:
**DE NL**

(56) Documents cités:
**EP - A - 0 026 106
DE - A - 1 940 028
FR - A - 1 494 153
FR - A - 2 021 708
FR - A - 2 395 832**

**Le dossier contient des informations techniques présentées postérieurement au dépôt de la demande et ne figurant pas dans le présent fascicule.**

(73) Titulaire: **RHONE-POULENC FILMS, 25, quai Paul Doumer, F-92408 Courbevoie (FR)**

(72) Inventeur: **Bodin, Jean-Marie, 82bis, avenue de Paris, F-78000 Versailles (FR)**
Inventeur: **De Leiris, Jean-Pierre, 1/1605 rue du Général de Larminat, F-94000 Creteil (FR)**
Inventeur: **Guillain, Madeleine, 184, rue de Bellevue, F-92700 Colombes (FR)**
Inventeur: **Noyer, Jacques, 4, rue Michelet, F-92130 Issy-les-Moulineaux (FR)**
Inventeur: **Nuret, Pierre, 35, rue Jacques Duclos, F-78500 Sartrouville (FR)**

(74) Mandataire: **Chichery, Guy et al, RHONE-POULENC RECHERCHES Service Brevets Chimie et Polymères Centre de Recherches de Saint-Fons B.P. 62, F-69192 St-Fons Cédex (FR)**

## Description

La présente invention concerne un procédé d'emballage de matériaux sensibles à l'oxygène et/ou à la vapeur d'eau.

Ce procédé est caractérisé en ce que le matériau d'emballage est un stratifié, d'épaisseur comprise entre 13 et 610 micromètres, comprenant deux couches de polymères thermoplastiques métallisées sur une face et assemblées par une couche d'adhésif, l'une des deux couches de polymères thermoplastiques étant consituée par du polytéréphtalate d'éthylèneglycol.

De tels stratifiés avec disverses épaisseurs pour les couches constituantes respectives ont déjà été décrits dans la littérature.

Le FR-A-1 494 153 les utilise en vue d'obtenir des surfaces réfléchissantes souples (écrans de projection, panneaux réfléchissants, éléments catadioptres); le FR-A-2 395 832 enseigne l'emploi de tels stratifiés pour réfléchir la lumière (parasols, serres, écrans sur vitrages); le brevet US-A-3 562 752 emploie de tels stratifiés comme matériau isolant dans l'industrie frigorifique ou en aéronautique, cet emploi étant dû dans ce cas à la présence d'un adhésif spécial.

De façon inattendue, il a été découvert que les stratifiés »bimétallisés« quand ils sont utilisées pour l'emballage, protègent de l'action de l'oxygène (et/ou de la vapeur d'eau) extérieur à l'emballage, les produits contenus dans l'emballage convenablement scellé.

Le brevet français 2 021 708 décrit des stratifiés pour emballage constitués par un film polypropylène métallisé collé par une couche d'adhésif avec un film polyester ou polypropylène. Ces films ne présentent pas de hautes propriétés barrières vis-à-vis de l'oxygène et de la vapeur d'eau.

La demande européenne publiée 26 106 décrit un emballage contenant deux couches extérieures de polytéréphtalate d'éthylèneglycol et deux couches intérieures d'aluminium sans interposition d'adhésif entre les deux couches intérieures d'aluminium. Le procédé d'obtention de ce stratifié présente toutefois des difficultés de réalisation pratique et industrielle.

La demande allemande publiée avant examen 1 940 028 divulgue des stratifiés obtenus par contrecollage d'une couche de polymère thermoplastique métallisée sur ses deux faces sur une autre couche de polymère thermoplastique. Toutefois les emballages obtenus à partir de pareils stratifiés ne se sont pas révélés tout à fait satisfaisants pour préserver leur contenu de l'action de l'oxygène et de la vapeur d'eau.

Parmi les produits que l'on peut protéger de l'oxygène pour les maintenir stockés sans altération sensible à l'aide du procédé selon l'invention, on peut citer de nombreux produits alimentaires: des produits alimentaires solides tels que, boissons en poudre comme lait en poudre, café soluble, thé soluble, potages en poudre, des gaufrettes, les biscuits salés, les fruits secs salés, comme les amandes salées, des denrées alimentaires contenant des liquides telles que conserve de fruits, de légumes et tout particulièrement de tomates, les huiles, les boissons telles que les jus de fruits et les vins, les produits pharmaceutiques en particulier, ceux qui sont hygroscopiques, des produits agricoles tels que les graines de semence, des produits industriels divers comme les composants électroniques, les plaques radiophotographiques.

On peut également utiliser le procédé d'emballage selon la présente invention en vue de mesurer le dégagement de produits gazeux de matières alimentaires en l'absence de contact avec l'oxygène extérieur à l'emballage; on peut ainsi étudier l'évolution de la maturation d'un fromage.

Les dimensions du stratifié peuvent varier dans d'assez larges limites; toutefois, le stratifié doit être suffisamment mince pour servir d'emballage, mais aussi suffisamment épais pour résister mécaniquement aux manipulations. De façon générale, l'épaisseur des cohes de polymères thermoplastiques peut varier entre 6 et 300 micromètres et de préférence entre 12 et 200 micromètres; les couches métalliques auront une épaisseur comprise entre 0,02 et 0,06 micromètres et de préférence entre 0,03 et 0,04 micromètres, la couche d'adhésif a une épaisseur comprise entre 1 et 10 micromètres, de préférence entre 2 et 4 micromètres. On voit donc que l'épaisseur totale du stratifié employé selon l'invention sera comprise entre 13 et 610 micromètres.

Il n'est pas obligatoire que les deux couches de polymère thermoplastique soient de même nature et de même épaisseur. De même, il n'est pas obligatoire que les deux couches métalliques soient du même métal et de la même épaisseur. En pratique toutefois on contrecolle sur lui-même par les couches métallisées un film métallisé; dans ce cas, il y a identité de structure et d'épaisseur pour les couches de polymère thermoplastique et il en est de même pour les couches métallisées. Il en sera de même quand on contrecolle sur lui-même un film métallisé face métallique contre face de polymère thermoplastique. Dans ce dernier cas, on peut pour protéger la couche métallique procéder à un revêtement supplémentaire de polymère thermoplastique par exemple du polyéthylène sur la couche métallique extérieure, le cas échéant à l'aide d'un adhésif du type polyuréthane. Ce revêtement supplémentaire peut servir à obtenir des emballages thermoscellables.

Comme polymères thermoplastiques, on peut utiliser le polytéréphtalate d'éthylèneglycol, le polypropylène cristallin, les polyéthylènes haute et basse densité, les nylons et en particulier le nylon 66; habituellement on utilise le polytéréphtalate d'éthylèneglycol et de préférence après biétirage. Il va de soi que le polymère est choisi en fonction du matériau à emballer, de façon, en ce qui concerne les produits alimentaires et les produits pharmaceutiques, à respecter les normes d'hygiène et de sécu-

2

rité.

Les couches métalliques peuvent contenir, seuls ou en combinaison différents métaux tels que aluminium, argent, chrome; de préférence, on utilise l'aluminium pour des raisons de commodité et de prix de revient. Le métal peut être déposé sur la feuille plastique par tout moyen connu tels que évaporation sous vide de métal, report à chaud, en général, on préfère utiliser le dépôt après évaporation sous vide de métal.

L'adhésif entre les deux couches métalliques peut être choisi dans les polyuréthanes: on utilise des adhésifs à un ou deux composants avec ou sans solvants.

Les emballages obtenus présentent une grande stabilité de leur imperméabilité à l'oxygène et/ou à la vapeur d'eau, même après froissement. Les emballages selon l'invention présentent donc sous ce rapport une supériorité remarquable par rapport aux emballages du commerce en feuille mince d'aluminium.

Les exemples suivants illustrent l'invention et montrent comment l'invention peut être réalisée.


### Exemple 1

On métallise par évaporation sous vide l'une des face d'un film polyester 12 micromètres, selon les techniques connues de façon à déposer 350 Å (0,035 micromètres) d'aluminium.

Après métallisation, on mesure sur le film métallisé une perméabilité à l'oxygène variant entre 0,5 et 0,8 cm$^3$/m$^2$/24 heures/bar.

On dépose sur la face métal de ce film, à l'aide d'un cylindre gravé d'une machine de contrecollage, une couche d'adhésif polyuréthane du commerce à 2 composants, du type colle solvant. Après séchage dans le séchoir de la contrecolleuse, la couche d'adhésif préséchée est de 4 micromètres.

Le film polyester métallisé ci-dessus enduit d'adhésif est ensuite calandré avec un deuxième film polyester métallisé identique au film décrit au début de cet exemple, en mettant en contact la face métal de ce film et l'adhésif.

Après calandrage, le stratifié obtenu est enroulé; on le laisse réticuler 5 jours. Il comprend dans l'ordre: une couche de polyester, une couche d'aluminium, une couche d'adhésif, une couche d'aluminium, une couche polyester.

Il a les caractéristiques suivantes:

| | |
|---|---|
| — épaisseur: | 28 micromètres |
| — perméabilité oxygène: | voisine de O: pas mesurable avec les appareils de mesure existant dans le commerce |
| — perméabilité Hélium: | 5 cm$^3$/m$^2$/24 heures/bar |
| — perméabilité vapeur d'eau: | inférieure à 0,1 g/m$^2$/24 heures (soit 1,16 microg/m$^2$/s) |

Après froissage, le stratifié conserve sensiblement ces caractéristiques, ce qui n'est pas le cas de la feuille d'aluminium.


### Exemple 2

On opère comme à l'exemple 1, mais on utilise une colle du commerce polyuréthane du type sans solvant, qui évite d'opération de préséchage de l'adhésif. On dépose une couche d'adhésif d'environ 1 micromètre.

Les caractéristiques du stratifié obtenu sont identiques à celles de l'exemple 1, l'épaisseur du complexe est de 25 micromètres.


### Exemple 3

Le stratifié obtenu à l'exemple 1 ou 2, est enduit d'adhésif selon la même technique que celle décrite dans ces mêmes exemples, sur l'une de ses faces, puis calandré avec un film polyéthylène 75 micromètres.

Le stratifié obtenu, qui comprend dans l'ordre une couche de polyester, une couche d'aluminium, une couche d'adhésif, une couche d'aluminium, une couche de polyester, une couche d'adhésif, une couche de polyéthylène a une épaisseur de 101 micromètres à 107 micromètres, est alors scellable sur la face polyéthylène, ce qui permet de confectionner des sachets pour le conditionnement de poudre déshydratée, tel que le lait. Les caractéristiques d'imperméabilité du stratifié sont les mêmes que celles de l'exemple 1.


### Exemple 4

Le film polyester métallisé enduit d'adhésif sur sa face métal, tel que décrit dans l'exemple 1, est calandré avec un film polyéthylène de 75 micromètres.

**0 069 642**

Le stratifié obtenu est à nouveau calandré avec un deuxième film polyester métallisé enduit d'adhésif sur sa face métal en mettant en contact la face polyester du complexe et l'adhésif.

Le stratifié obtenu comprend dans l'ordre: une couche polyester, une couche d'aluminium, une couche d'adhésif, une couche de polyester, une couche d'aluminium, une couche d'adhésif, une couche de polyéthylène, est scellable sur sa face polyéthylène, ce qui permet de confectionner des sachets. Le stratifié obtenu a la même épaisseur et présente les mêmes caractéristiques que celui de l'exemple 3.

## Exemple 5

Le film polyester métallisé, enduit d'adhésif comme décrit dans l'exemple 1 et 2, est calandré avec un film polypropylène également métallisé par évaporation sous vide. On met en contact l'adhésif avec le métal du film polypropylène.

Le film polypropylène a une épaisseur de 20 micromètres, il est du type coextrudé et scellable sur lui-même.

Le stratifié obtenu a les valeurs suivantes de perméabilité:

— oxygène:            0,6 cm$^3$/m$^2$/24 heures/bar
— vapeur d'eau:       0,13 g/m$^2$/24 heures, soit (1,50 microg/m$^2$/s)

Il a une épaisseur de 33 à 36 micromètres.
Il permet de confectionner des sachets pour le conditionnement des graines de semence.

## Exemple 6

Le stratifié obtenu à l'exemple 1 ou 2 est enduit d'adhésif polyuréthane sur l'une de ses faces selon la même technique que celle décrite à l'exemple 1 puis calandré avec un film polyéthylène de 100 micromètres.

L'épaisseur totale du matériau est comprise entre 126 et 133 micromètres. Les caractéristiques de perméabilité sont identiques à celles de l'exemple 1.

Ce stratifié a permis la confection de sachets destinés à mesurer le coefficient respiratoire d'un fromage en cours de maturation, grâce à l'adjonction d'une vanne scellée sur l'une des faces principales, pour le prélèvement des gaz.

## Revendications

1. Procédé d'emballage de matériaux sensibles à l'oxygène et/ou à la vapeur d'eau, caractérisé en ce que le matériau d'emballage est un stratifié, d'épaisseur comprise entre 13 et 610 micromètres, comprenant deux couches de polymères thermoplastiques métallisées sur une face et assemblées par une couche d'adhésif, l'une des deux couches de polymères thermoplastiques étant constituée par du polytéréphtalate d'éthylèneglycol.

2. Procédé selon la revendication 1, caractérisé en ce que les deux couches de polymères thermoplastiques métallisées sont assemblées par leur face métallisée.

3. Procédé selon la revendication 1, caractérisé en ce que les deux couches de polymères thermoplastiques métallisées sont assemblées face métallisée contre face thermoplastique.

4. Procédé selon l'une quelconque des revendications 1 à 3, caractérisé en ce que le métal est l'aluminium.

5. Procédé selon l'une quelconque des revendications 1 à 4, caractérisé en ce que le polymère thermoplastique de la deuxième couche est choisi dans le groupe constitué par le polytéréphtalate d'éthylèneglycol et le polypropylène.

6. Procédé selon l'une quelconque des revendications 1, 3, 4 ou 5, caractérisé en ce que ledit stratifié comprend un revêtement supplémentaire de polymère thermoplastique sur la couche métallique extérieure du stratifié.

7. Procédé selon l'une quelconque des revendications 1 à 6, employé à l'emballage des denrées alimentaires, des produits pharmaceutiques, des produits industriels et des produits agricoles.

## Patentansprüche

1. Verfahren zum Verpacken von gegen Sauerstoff und/oder Wasserdampf empfindlichen Materialien, dadurch gekennzeichnet, daß man als Verpackungsmaterial ein Schichtmaterial einer Stärke von 13 bis 610 µm, bestehend aus zwei Schichten eines auf einer Seite metallisierten thermoplastischen

4

Polymeren, die miteinander durch eine Klebstoffschicht verbunden sind, verwendet, und wobei eine der beiden Schichten des thermoplastischen Polymeren aus dem Polytherephthalat des Äthylenglycols besteht.

2. Verfahren nach Anspruch 1, dadurch gekennzeichnet, daß die beiden Schichten des metallisierten thermoplastischen Polymeren miteinander verbunden sind über ihre metallisierten Flächen.

3. Verfahren nach Anspruch 1, dadurch gekennzeichnet, daß die beiden Schichten des metallisierten thermoplastischen Polymeren miteinander verbunden sind über die metallisierte Fläche und die Thermoplastenfläche.

4. Verfahren nach einem der Ansprüche 1 bis 3, dadurch gekennzeichnet, daß als Metall Aluminium verwendet wird.

5. Verfahren nach einem der Ansprüche 1 bis 4, dadurch gekennzeichnet, daß das thermoplastische Polymere der zweiten Schicht ausgewählt ist aus der Gruppe bestehend aus dem Polytherephthalat des Äthylenglycols und Polypropylen.

6. Verfahren nach einem der Ansprüche 1, 3, 4 oder 5, dadurch gekennzeichnet, daß das besagte Schichtmaterial eine zusätzliche Mantelschicht aus einem thermoplastischen Polymer auf der äußeren Metallschicht des Schichtmaterials aufweist.

7. Verfahren nach einem der Ansprüche 1 bis 6, dadurch gekennzeichnet, daß man es für das Verpacken von Lebensmitteln, Pharmaceutika, Industrieprodukten und landwirtschaftlichen Erzeugnissen anwendet.

## Claims

1. Process for packaging products sensitive to oxygen and/or water vapour characterized in that the packaging material is a laminate, with a thickness of 13 to 610 micrometers, comprising two layers of thermoplastic polymers, each metallised on one face and joined together by a layer of adhesive, one of the two layers of thermoplastic polymers consisting of poly-(ethyleneglycol) terephtalate.

2. Process according to claim 1 characterized in that the metallised layers of thermoplastic polymers are joined together at their metallised faces.

3. Process according to claim 1 characterized in that the two metallised layers of thermoplastic polymers are joined together with a metallised face against a thermoplastic face.

4. Process according to any one of claims 1 to 3 in which the metal is aluminium.

5. Process according to any one of claims 1 to 4 characterized in that the thermoplastic polymer of the second layer is poly-(ethyleneglycol) terephtalate or polypropylene.

6. Process according to any one of claims 1, 3, 4 or 5, characterized in that the outer metal layer of the laminate has a layer of another thermoplastic polymer thereover.

7. Process according to any one of claims 1 to 6 used for packaging foodstuff, pharmatical products, industrial products or agricultural products.